# EUROPEAN PATENT APPLICATION

(11) **EP 2 481 778 A1**
(43) Date of publication of application: **01.08.2012**
(21) Application number: 10818910.1
(22) Date of filing: 27.09.2010
(51) Int. Cl.: C08L 101/00, C08K 9/04

(54) **RESIN COMPOSITION FOR CARBON DIOXIDE EMISSION REDUCTION, METHOD FOR PRODUCING SAME, AND USE THEREOF**

(30) Priority: 27.09.2009 JP 2009240849
(71) Applicant: Acteiive Corporation, Chiba 278-8510 (JP)
(72) Inventor: NAGAHAMA Masamitsu, Kitakatsushika-gun Saitama 343-0111 (JP); KIDO Shigeru, Nishishirakawa-gun Fukushima 969-0285 (JP); SATO Akira, Noda-shi Chiba (JP)
(74) Representative: Grünecker, Kinkeldey, Stockmair & Schwanhäusser
(86) International application number: PCT/JP2010/066730
(87) International publication number: WO 2011/037238

(57) **Abstract**

PROBLEMS

A resin material and a method of producing the resin material are provided in which, although carbon dioxide emission reduction during disposal of the resin material is required, because dispersibility is poor and effects are poor when a carbon dioxide absorbent is dispersed in a resin by a conventional method, the resin material has good carbon dioxide emission reduction effects during incineration, is lightweight, and has excellent mechanical properties by dispersibility being improved.

MEANS FOR SOLVING PROBLEMS

A carbon dioxide absorbent and a dispersion aid are mixed and subjected to a dispersion treatment at least one selected from a supercritical fluid treatment, ultrasonication, and a stirring treatment. The mixture is subsequently added to a resin, thereby obtaining a resin material having good carbon dioxide emission reduction effects.

## Description

### TECHNICAL FIELD

The present invention relates to a resin composition for carbon dioxide emission reduction, a method for producing the resin composition, and use of the resin composition.

### BACKGROUND ART

Taking advantage of characteristics such as being lightweight, resistant to corrosion, and easily molded, resin materials are processed into Various molded products, such as films, sheets, and bottles, and used in vast quantities in a wide range of fields, from daily household products to industrial use, thus supporting our daily lives. However, because the resin materials have been widely circulated in vast quantities, various issues are arising, such as the generation of toxic substances during incineration at disposal. Here, the issue of dioxin emissions, dioxin being a representative toxic substance, is being solved through control of incineration temperature. However, carbon dioxide, of which emission reduction is strongly desired due to its effects on global warming, is one of the end products of incineration and, therefore, is currently difficult to reduce.

On the other hand, as a measure against incineration, biodegradable resins exist that naturally decompose by landfilling. However, it is difficult to replace all of the vast quantities of resin materials being used and to dispose of the biodegradable resins by landfilling. Therefore, incineration holds an important position in the methods of resin disposal.

In addition, as a method for reducing the quantity of disposed resin materials itself, recycling is being implemented. However, only some of the resin materials are being recycled. Also, as recycling is repeated, physical properties, such as strength, deteriorate and the resin material is ultimately incinerated. Therefore, recycling is not a complete solution for carbon dioxide emissions.

To solve the issue of carbon dioxide emissions, such as that described above, a method has been filed in which a compound that suppresses the generation of carbon dioxide is mixed into a resin (refer to, for example Patent Literature 1, Patent Literature 2, and Patent Literature 3).
In Patent Literature 1, calcium carbonate, aluminosilicate, and calcium hydroxide are used as the compounds that suppress the generation of carbon dioxide. In Patent Literature 2, zeolite, calcium carbonate, and a specific flame retardant are used. In Patent Literature 3, coconut mesocarp fibers are used.
Patent Literature 1: Japanese Patent Laid-open Publication No. 2008-106171
Patent Literature 2: Japanese Patent Laid-open Publication No. Heisei 7-188487
Patent Literature 3: Japanese Patent Laid-open Publication No. 2006-77048

### DISCLOSURE OF INVENTION

### PROBLEM TO BE SOLVED BY THE INVENTION

However, in Patent Literature 1 and Patent Literature 2, inorganic compounds having poor compatibility with resin, which is an organic compound, are used as the compounds that suppress the generation of carbon dioxide, and are mixed and combined by an extruding machine using an ordinary method with the resin. Therefore, dispersibility of the inorganic compounds is poor and aggregation occurs, thereby causing decrease in impact resistance of the resin. In addition, because the surface area of the inorganic compounds decreases as a result of aggregation, the effect of absorbing carbon dioxide into the pores of aluminosilicate and zeolite, and chemical reaction between calcium hydroxide and carbon dioxide cannot be fully utilized. Therefore, to increase the quantity of carbon dioxide absorbed by the inorganic compounds, the blending quantities of the inorganic compounds are increased. Impact resistance further deteriorates, and a fragile material is formed. The lightweight characteristic of resin materials is also lost.
In addition, in Patent Literature 3, a plant-derived compound is used. Therefore, heat-resistance is low, and discoloration and smell occur at high temperatures during resin molding. As a result, molding temperatures and methods are limited. The chemical stability and easy-to-mold characteristic of resin materials are lost.

As described above, it is very difficult to reduce carbon dioxide emissions during incineration, while taking advantage of the characteristics of resin. However, with the government announcing long-term goals for carbon dioxide reduction and the like, this issue is becoming increasingly difficult to avoid. It is thought that the demand for resin materials capable of reducing carbon dioxide emissions, without compromise to the characteristics of resin, will rise even more in the future.

In light of the conventional technologies such as those described above, an object of the present invention is to provide a resin material that has improved dispersibility of an inorganic compound or an organic compound having a carbon-dioxide absorbing effect, has a good effect of reducing carbon dioxide emissions during incineration, is lightweight and has excellent mechanical properties, a method of producing the resin material, and use of the resin material.

### MEANS FOR SOLVING PROBLEM

To solve the above-described issues, a resin composition for carbon dioxide emission reduction according to a first aspect of the present invention is formed by a mixture of a carbon dioxide absorbent and a dispersion aid being subjected to a dispersion treatment and subsequently added to a resin.
The resin composition for carbon dioxide emission reduction according to a second aspect is that in which the dispersion treatment is at least one selected from a supercritical fluid treatment, ultrasonication, and a stirring treatment.
The resin composition for carbon dioxide emission reduction according to a third aspect is that in which the carbon dioxide absorbent is at least one selected from a metal hydroxide, a metal oxide, an aluminosilicate, a titanic acid compound, and a lithium compound.
The resin composition for carbon dioxide emission reduction according to a fourth aspect is that in which the dispersion aid is at least one selected from a metal salt of fatty acid, a polymeric surfactant, and an amphipathic lipid.
The resin composition for carbon dioxide emission reduction according to a fifth aspect is that in which the resin is at least one selected from a polyolefin resin, a polyester resin, a polyamide resin, a vinyl chloride resin, and a polystyrene resin.

To solve the above-described issues, a method of producing a resin composition for carbon dioxide emission reduction according to a first aspect of the present invention is formed by a mixture of a carbon dioxide absorbent and a dispersion aid being subjected to a dispersion treatment and subsequently added to a resin.
The method of producing a resin composition for carbon dioxide emission reduction according to a second aspect is that in which the dispersion treatment is at least one selected from a supercritical fluid treatment, ultrasonication, and a stirring treatment.
The method of producing a resin composition for carbon dioxide emission reduction according to a third aspect is that in which the carbon dioxide absorbent is at least one selected from a metal hydroxide, a metal oxide, an aluminosilicate, a titanic acid compound, and a lithium compound.
The method of producing a resin composition for carbon dioxide emission reduction according to a fourth aspect is that in which the dispersion aid is at least one selected from a metal salt of fatty acid, a polymeric surfactant, and an amphipathic lipid.
The method of producing a resin composition for carbon dioxide emission reduction according to a fifth aspect is that in which the resin is at least one selected from a polyolefin resin, a polyester resin, a polyamide resin, a vinyl chloride resin, and a polystyrene resin.

In addition, use of a resin composition for carbon dioxide emission reduction formed by a mixture of a carbon dioxide absorbent and a dispersion aid being subjected to a dispersion treatment and subsequently added to polyethylene resin includes packaging, containers, building materials, agricultural materials, fishery materials, electrical components, machine components, sundries and household items, and foamed items.
In addition, use of a resin composition for carbon dioxide emission reduction formed by a mixture of a carbon dioxide absorbent and a dispersion aid being subjected to a dispersion treatment and subsequently added to polypropylene resin includes packaging, containers, agricultural materials, fishery materials, automobile components, household appliances, sundries and household items, textile products, and medical products.
In addition, use of a resin composition for carbon dioxide emission reduction formed by a mixture of a carbon dioxide absorbent and a dispersion aid being subjected to a dispersion treatment and subsequently added to polyethylene terephthalate resin includes packaging, containers, sheets, automobile components, sundries and household items, and textile products.
In addition, use of a resin composition for carbon dioxide emission reduction formed by a mixture of a carbon dioxide absorbent and a dispersion aid being subjected to a dispersion treatment and subsequently added to liquid crystal resin includes containers, fishery materials, electrical components, machine components, optical components, automobile components, sundries and household items, and textile products.
In addition, use of a resin composition for carbon dioxide emission reduction formed by a mixture of a carbon dioxide absorbent and a dispersion aid being subjected to a dispersion treatment and subsequently added to polyamide resin includes packaging, agricultural materials, fishery materials, electrical components, machine components, optical components, automobile components, sundries and household items, textile products, and medical products
In addition, use of a resin composition for carbon dioxide emission reduction formed by a mixture of a carbon dioxide absorbent and a dispersion aid being subjected to a dispersion treatment and subsequently added to vinyl chloride resin includes packaging, containers, agricultural materials, building materials, automobile components, sundries and household items, foamed items, textile products, and printing and advertisements.
In addition, use of a resin composition for carbon dioxide emission reduction formed by a mixture of a carbon dioxide absorbent and a dispersion aid being subjected to a dispersion treatment and subsequently added to polystyrene resin includes containers, building materials, household appliances, automobile components, sundries and household items, and foamed items.

### EFFECT OF THE INVENTION

In the present invention, a mixture of a carbon dioxide absorbent and a dispersion aid is subjected to a dispersion treatment and subsequently added to a resin. As a result, the carbon dioxide absorbent having poor compatibility with the resin can be dispersed in the resin without being aggregated. A resin composition for carbon dioxide emission reduction having a good effect of absorbing carbon dioxide can be obtained
In addition, because dispersibility can be improved and the surface area of the carbon dioxide absorbent that comes into contact with the resin can be increased, the effect of absorbing carbon dioxide can be achieved with a small quantity. Therefore, the amount of carbon dioxide absorbent added to the resin can be reduced. Inherent characteristics of resin, such as being lightweight and easy to mold, are not compromised, and application can be significantly widened.
Moreover, as a result of the carbon dioxide absorbent to be added being selected accordingly based on use, a resin composition for carbon dioxide emission reduction that is lightweight and has high impact resistance can be produced.

### BRIEF DESCRIPTION OF DRAWINGS

Fig. 1 shows the evaluation results of examples of a resin composition for carbon dioxide emission reduction of the present invention.
Fig. 2 shows the evaluation results of conventional resin compositions.
Fig. 3 is a comparison diagram of carbon dioxide emission quantity between an example and a comparison example based on the type of carbon dioxide absorbent.
Fig. 4 shows comparisons of carbon dioxide emission quantity between an example and a comparison example based on the type of dispersion aid.
Fig. 5 shows comparisons of carbon dioxide emission quantity between an example and a comparison example based on the type of resin.
Fig. 6 shows comparisons of carbon dioxide emission quantity based on dispersion treatment method.
Fig. 7 is a transmission electron microscope image showing dispersibility of the carbon dioxide absorbent in the dispersion aid when a dispersion treatment is not performed.
Fig. 8 is transmission electron microscope images showing dispersibility of the carbon dioxide absorbent in the dispersion aid when supercritical fluid treatment is performed.
Fig. 9 is transmission electron microscope images showing dispersibility of the carbon dioxide absorbent in the dispersion aid when ultrasonication is performed.
Fig. 10 is transmission electron microscope images showing dispersibility of the carbon dioxide absorbent in the dispersion aid when stirring treatment is performed.
Fig. 11 shows a relationship between exposure time in the supercritical fluid treatment and the mean particle size of the carbon dioxide absorbent.
Fig. 12 shows a relationship between irradiation time in ultrasonication and the mean particle size of the carbon dioxide absorbent.
Fig. 13 shows a relationship between stirring time in the stirring treatment and the mean particle size of the carbon dioxide absorbent.
Fig. 14 shows a relationship between the blending quantity of the dispersion aid and the mean particle size of the carbon dioxide absorbent.
Fig. 15 shows a relationship between the blending quantity of a carbon dioxide absorbent dispersion liquid and the carbon dioxide emission quantity.
Fig. 16 is a list of uses of the resin composition for carbon dioxide emission reduction of the present invention when a polyolefin resin is used.
Fig. 17 is a list of uses of the resin composition for carbon dioxide emission reduction of the present invention when a polyester resin is used.
Fig. 18 is a list of uses of the resin composition for carbon dioxide emission reduction of the present invention when a polyamide resin is used.
Fig. 19 is a list of uses of the resin composition for carbon dioxide emission reduction of the present invention when a vinyl chloride resin is used.
Fig. 20 is a list of uses of the resin composition for carbon dioxide emission reduction of the present invention when a polystyrene resin is used.

### EXPLANATIONS OF LETTERS OR NUMERALS

### BEST MODE(S) FOR CARRYING OUT THE INVENTION

As a result of keen research into solving the above-described issues, the inventors of the present invention have found that a resin composition having good carbon dioxide emission reduction effects during incineration can be obtained by performing treatment that improves dispersibility of a carbon dioxide absorbent and adding the treated carbon dioxide absorbent to a resin. The present invention was thereby completed.

In other words, the present invention relates to a resin composition for carbon dioxide emission reduction, a method for producing the resin composition, and use of the resin composition, in which the resin composition for carbon dioxide emission reduction is obtained by a carbon dioxide absorbent being mixed with a dispersion aid, and the resultant mixture being subjected to a dispersion treatment and subsequently added to a resin.
The details thereof will be described hereafter.

The carbon dioxide absorbent of the present invention can be any substance as long as the substance chemically or physically absorbs carbon dioxide. For example, as inorganic compounds, metal hydroxides, metal oxides, aluminosilicates, titanic acid compounds, lithium silicate, silica gel, alumina, and activated carbon are preferable. As an organic compound, coconut mesocarp fibers are preferable.

As the metal hydroxides, for example, lithium hydroxide, sodium hydroxide, magnesium hydroxide, calcium hydroxide, and barium hydroxide can be given.
As the metal oxides, for example, magnesium oxide, calcium oxide, and zinc oxide can be given.
As the aluminosilicates, for example, amorphous aluminosilicate, natural zeolite, and synthetic zeolite can be given.
As the titanic acid compounds, for example, barium titanate, and barium orthotitanate can be given.

The dispersion aid of the present invention can be any substance as long as the substance is capable of efficiently dispersing the carbon dioxide absorbent, which is an inorganic compound or an organic compound, in the resin. For example, metal salts of fatty acid, polymeric surfactants, and amphipathic lipids are preferable.

As the metal salts of fatty acid, for example, calcium stearate, zinc stearate, magnesium stearate, aluminum stearate, barium stearate, lithium stearate, sodium stearate, potassium stearate, 12-hydroxystearic acid calcium salt, 12-hydroxystearic acid zinc salt, 12-hydroxystearic acid magnesium salt, 12-hydroxystearic acid aluminum salt, 12-hydroxystearic acid barium salt, 12-hydroxystearic acid lithium salt, 12-hydroxystearic acid sodium salt, and 12-hydroxystearic acid potassium salt can be given.
As the polymeric surfactants, for example, sodium polyacrylate, sodium polycarboxylate, olefin/maleic acid copolymer sodium salt, polyoxyethylene gemini surfactants (POE30-10-ODEs, POE20-10ODEs, and POE10-10-ODEs), phosphate ester gemini surfactant (POH-10-ODEs), and dicarboxylic acid type gemini surfactant (DC-10-ODEs) can be given.
As the amphipathic lipids, for example, glycerophospholipids, such as phosphatidylcholine, phosphatidylethanolamine, phosphatidylserine, phosphatidic acid, phosphatidylglycerol, phosphatidylinositol, cardiopine, egg yolk lecithin, hydrogenated egg yolk lecithin, soy lecithin, and hydrogenated soy lecithin, and sphingophospholipids, such as sphingomyelin, ceramide phosphorylethanolamine, and ceramide phosphorylglycerol can be given.

The dispersion treatment of the present invention can be any method as long as the method is capable of efficiently covering the surface of the carbon dioxide absorbent with the dispersion aid and preparing a dispersion liquid in which the carbon dioxide absorbent is evenly dispersed.
For example, supercritical fluid treatment, ultrasonication, and stirring treatment are preferable.

As a solvent for the dispersion liquid, water or an organic solvent is preferable. As the organic solvent, specifically, ethanol, dichloromethane, hexane, and the like can be given.

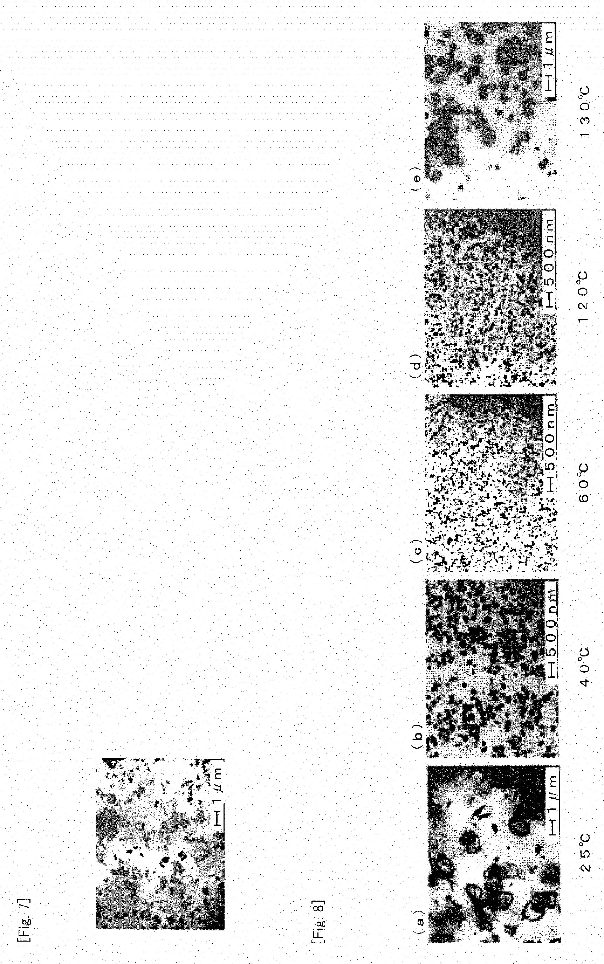

In the supercritical fluid treatment, the mixture of carbon dioxide absorbent and dispersion aid is exposed to a supercritical fluid, thereby improving dispersibility of the carbon dioxide absorbent. As the supercritical fluid, carbon dioxide in a supercritical state is preferable.
The carbon dioxide in a supercritical state of the present invention refers to carbon dioxide that is in a supercritical state in which critical temperature is 30.98°C and critical pressure is 7.3773MPa or more. Carbon dioxide under critical condition that is only the critical temperature or only the critical pressure is not considered to be in a supercritical state.
Here, transmission electron microscope images are shown in Fig. 8 of a mixture containing 100 parts by weight of calcium hydroxide as the carbon dioxide absorbent, 1 part by weight of 12-hydroxystearic acid calcium salt as the dispersion aid, and 20 parts by weight of ion-exchanged water as a dispersion solvent, to which the supercritical fluid treatment was performed at a treatment pressure of 20MPa and a treatment temperature of 25°C, 40°C, 60°C, 120°C, and 130°C for 15 minutes, respectively.
The black areas in the images indicate the carbon dioxide absorbent covered by the dispersion aid, and the white areas indicate the aqueous solution of the dispersion aid.
When the respective mixtures subjected to the supercritical fluid treatment at each treatment temperature are compared, in the mixture subjected to the dispersion treatment at the treatment temperature of 25°C that does not meet the supercritical fluid treatment condition, the particle size of the carbon dioxide absorbent is 1µm or more, and the carbon dioxide absorbent is aggregated in the aqueous solution of the dispersion aid without being dispersed (see Fig. 8A). On the other hand, in the mixture subjected to the dispersion treatment at the treatment temperature of 40°C that meets the supercritical fluid treatment condition, the particle size of the carbon dioxide absorbent is about 100nm, and the carbon dioxide absorbent is evenly dispersed in the mixture (see Fig. 8B). Therefore, it can be said that, in the supercritical fluid treatment, treatment is required to be performed in a state in which both pressure and temperature that place the carbon dioxide in the supercritical state are met.
In addition, regarding the mixtures subjected to the dispersion treatment at the treatment temperature of 60°C and the treatment temperature of 120°C, the particle size of the carbon dioxide absorbent in both instances is about 10nm, and high dispersibility is achieved (see Fig. 8C and D). However, when the treatment temperature exceeds 130°C, the particle size of the carbon dioxide absorbent becomes about 0.8µm, and the carbon dioxide absorbent is clearly aggregated (See Fig. 8E). In other words, a treatment temperature that is too high is unfavorable, and the dispersion effect is instead suppressed at a treatment temperature of an excessive condition.

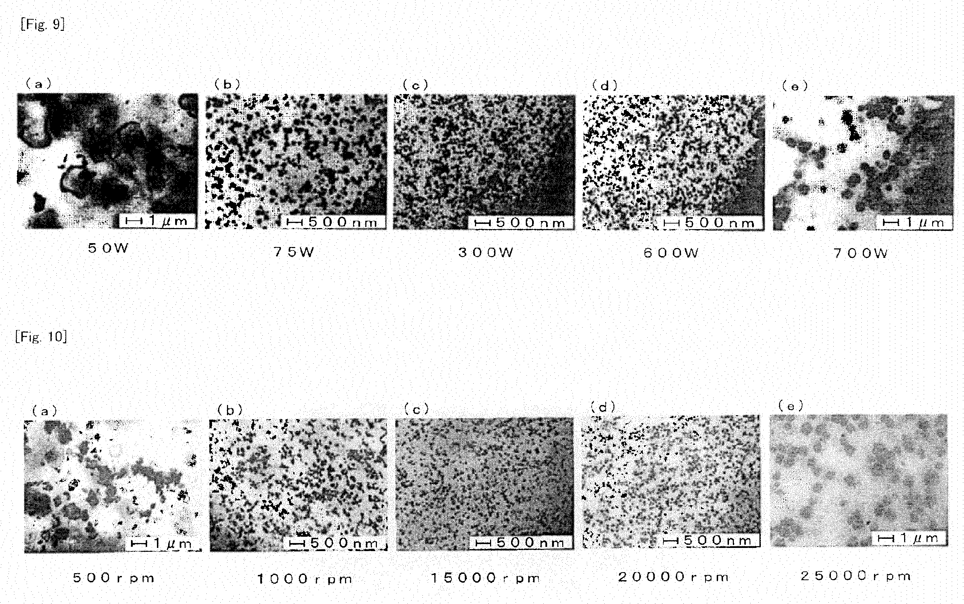

In ultrasonication, the mixture of carbon dioxide absorbent and dispersion aid is irradiated with ultrasonic waves having a frequency of 15KHz to 60KHz and an intensity of about 75W to 600W, thereby improving dispersibility of the carbon dioxide absorbent.
Here, transmission electron microscope images are shown in Fig. 9 of a mixture containing 100 parts by weight of calcium hydroxide as the carbon dioxide absorbent, 1 part by weight of 12-hydroxystearic acid calcium salt as the dispersion aid, and 20 parts by weight of ion-exchanged water as a dispersion solvent, to which ultrasonication was performed under a condition of 60°C by ultrasonic waves having a frequency of 40Khz and an intensity of 50W, 75W, 300W, 600W, and 700W for 30 minutes, respectively.
When the respective mixtures subjected to ultrasonication at each intensity are compared, in the mixture subjected to the dispersion treatment by irradiation of ultrasonic waves having an intensity of 50W, the particle size of the carbon dioxide absorbent is about 1µm, and the carbon dioxide absorbent is aggregated in the treated mixture without being dispersed (see Fig. 9A). On the other hand, in the mixture subjected to the dispersion treatment by irradiation of ultrasonic waves having an intensity of 75W, the particle size of the carbon dioxide absorbent is about 150nm, and the carbon dioxide absorbent is evenly dispersed in the mixture (see Fig. 9B).
In addition, in the instances of irradiation of ultrasonic waves having an intensity of 300W and 600W, the particle size of the carbon dioxide absorbent in both instances is about 80nm, and high dispersibility is achieved (see Fig. 9C and 9D). However, in the instance of irradiation of ultrasonic waves at an intensity of 700W, the particle size of the carbon dioxide absorbent becomes about 1µm, and the carbon dioxide absorbent is clearly aggregated (see Fig. 9E).
Therefore, it can be said that, in ultrasonication, irradiation of ultrasonic waves having an intensity of 75W to 600W is preferable. In instances of irradiation of ultrasonic waves having a lower intensity than the foregoing, sufficient dispersion effects cannot be achieved. Conversely, in instances of irradiation of ultrasonic waves having a higher intensity than the foregoing, the functions of the dispersion aid are lost and, therefore, such instances are not preferable.

In addition, in the stirring treatment, the mixture of carbon dioxide absorbent and dispersion aid is stirred at a rotation speed of 1,000rpm to 20,000 rpm, thereby improving dispersibility of the carbon dioxide absorbent.
Here, transmission electron microscope images are shown in Fig. 10 of a mixture containing 100 parts by weight of calcium hydroxide as the carbon dioxide absorbent, 1 part by weight of 12-hydroxystearic acid calcium salt as the dispersion aid, and 20 parts by weight of ion-exchanged water as a dispersion solvent, to which the stirring treatment was performed under a condition of 60°C at a rotation speed of 500rpm, 1,000rpm, 15,000rpm, 20,000rpm, and 25,000rpm for 30 minutes, respectively.
When comparing the mixtures subjected to the stirring treatment at each rotation speed, in the mixture treated at a rotation speed of 500rpm, variations can be seen in the particle size of the carbon dioxide absorbent, with the larger being 3µm or more, and the carbon dioxide absorbent is aggregated in the mixture without being dispersed (see Fig. 10A). On the other hand, in the mixture treated at a rotation speed of 1,000rpm, the particle size of the carbon dioxide absorbent is about 100nm, and the carbon dioxide absorbent is evenly dispersed in the mixture (see Fig. 10B).
In addition, regarding the mixtures treated at a rotation speed of 15,000rpm and 20,000rpm, the particle size of the carbon dioxide absorbent in both instances are about 60nm, and high dispersibility is achieved (see Fig. 10C and D). However, regarding the mixture treated at a rotation speed of 25,000rpm, the particle size of the carbon dioxide absorbent becomes about 0.8µm, and the carbon dioxide absorbent is clearly aggregated (see Fig. 10E).
Therefore, in the stirring treatment, treatment at a rotation speed of 1,000rpm to 20,000rpm is preferable. In instances of treatment at a slower rotation speed than the foregoing, sufficient dispersion does not occur because the rotation speed is insufficient, and the carbon dioxide absorbent is aggregated. Conversely, in instances of treatment at a higher rotation speed than the foregoing, the dispersion aid is prevented from covering the surface of the carbon dioxide absorbent. Aggregation occurs in the carbon dioxide absorbent and, therefore, such instances are not preferable.

The resin of the present invention can be any resin as long as it is a commonly used resin. For example, polyolefin resin, polyester resin, polyamide resin, vinyl chloride resin, and polystyrene resin are preferable.

To produce the resin compound for carbon dioxide emission reduction using the above-described ingredients and dispersion treatments, the following can be performed.

First, a carbon dioxide absorbent dispersion liquid is produced by mixing the carbon dioxide absorbent and the dispersion aid with water or an organic solvent, and performing any of the supercritical fluid treatment, ultrasonication, and the stirring treatment. At this time, the mixture has transparency when the carbon dioxide absorbent is evenly dispersed.
The mixture ratio is preferably 0.1 to 10 parts by weight of the dispersion aid to 100 parts by weight of the carbon dioxide absorbent. Most preferably, the dispersion aid is 0.1 to 5 parts by weight.
When the added quantity of dispersion aid in relation to the carbon dioxide absorbent is less than the foregoing, the carbon dioxide absorbent in the carbon dioxide absorbent dispersion liquid that is the produced mixture is not sufficiently dispersed. Dispersibility in the resin to which the carbon dioxide absorbent is ultimately mixed is poor, and the quantity of absorbed carbon dioxide decreases.
In addition, when the added quantity is more than foregoing, a carbon dioxide absorbent dispersion liquid having a sufficient concentration of carbon dioxide absorbent cannot be obtained. To meet the required concentration of carbon dioxide absorbent dispersion liquid to be added to the resin, the added amount increases, thereby resulting in difficulty in mixing.

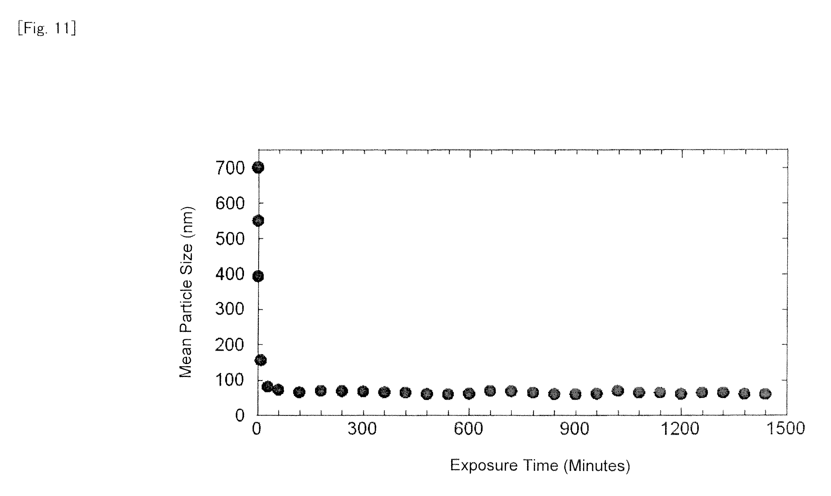

When the supercritical fluid treatment is performed, the mixture is preferably heated to a temperature of 30.98°C or more under carbon dioxide, and treated at a pressure of 7.37MPa or more for 1 minute to 12 hours. Most preferably, the mixture is treated at a temperature of 60°C to 120°C for 10 minutes to 1 hour.
Here, particle size distribution measurement during the exposure time in the supercritical fluid treatment at a treatment temperature of 60°C and a treatment pressure of 20MPa was performed. From the results, the mean particle size for each exposure time was calculated. The relationship between exposure time and mean particle size obtained from the results is shown in Fig. 11.
When the exposure time is less than 10 minutes, or in other words, 0.1 minute, 0.5 minute, and 1 minute, dispersibility of the carbon dioxide absorbent in relation to the dispersion aid is insufficient and aggregation occurs. The mean particle size of the carbon dioxide absorbent is clearly large, from about 400nm to 700nm. In addition, when the exposure time is longer than 1 hour, or in other words, from 2 hours to 24 hours, very little difference can be found in the mean particle size compared to that when the exposure time is 1 hour.

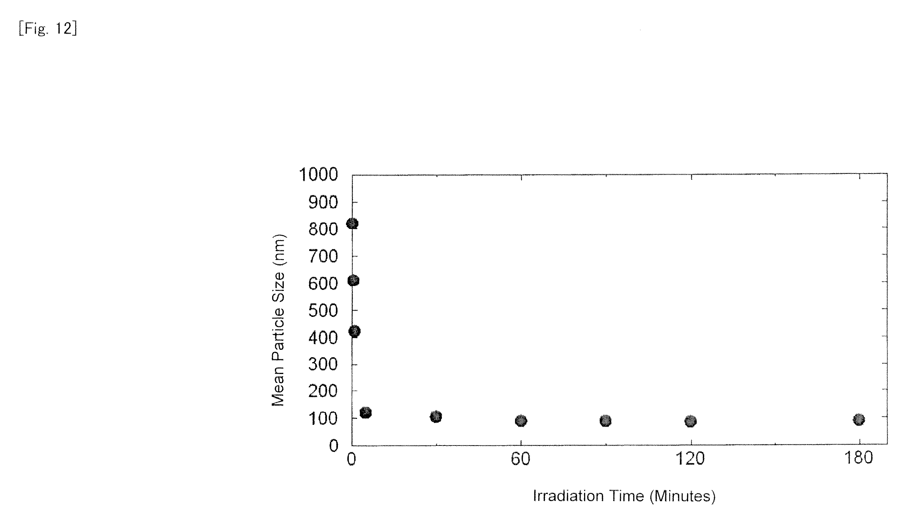

In addition, when ultrasonication is performed, the mixture is preferably irradiated with ultrasonic waves having a frequency of 15KHz to 60Khz and an intensity of 75W to 600W under a condition of 40°C to 80°C for 5 minutes to 60 minutes. Most preferably, ultrasonic waves having a frequency of 40KHz and an intensity of 300W are irradiated for 30 minutes.
Here, particle size distribution measurement during the irradiation time in ultrasonication using ultrasonic waves having a frequency of 40KHz and an intensity of 300W under a condition of 60°C was performed. From the results, the mean particle size for each irradiation time was calculated. The relationship between irradiation time and mean particle size obtained from the results is shown in Fig. 12.
When the irradiation time is less than 5 minutes, or in other words, 0.1 minute, 0.5 minute, and 1 minute, dispersibility of the carbon dioxide absorbent in relation to the dispersion aid is insufficient and aggregation occurs. The mean particle size of the carbon dioxide absorbent is clearly large, from about 400nm to about 800nm. In addition, when the irradiation time is longer than 60 minutes, or in other words, 90 minutes, 120 minutes, and 180 minutes, very little difference can be found in the mean particle size compared to that when the irradiation time is 60 minutes.

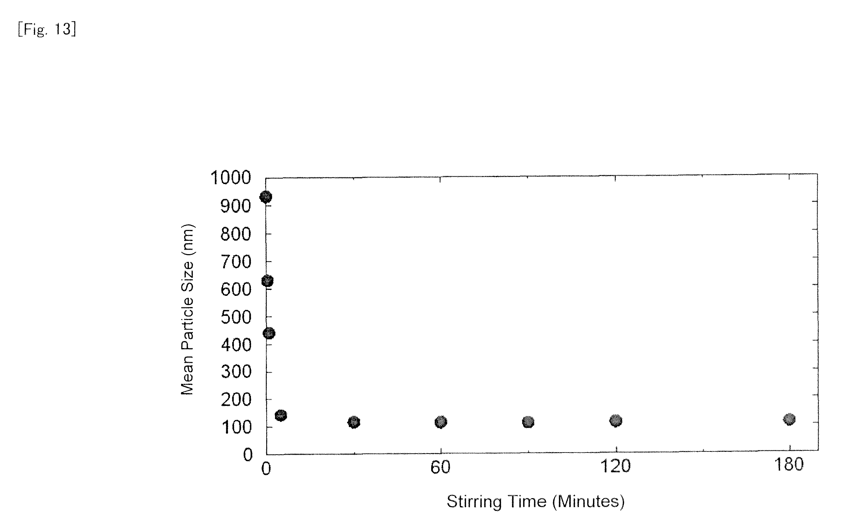

In addition, when the stirring treatment is performed, the mixture is preferably stirred at a rotation speed of about 1,000rpm to 20,000rpm under a temperature condition of 40°C to 80°C for 5 minutes to 60 minutes. Most preferably, the mixture is stirred at a rotation speed of 15,000rpm under a condition of 60°C for 30 minutes.
Here, particle size distribution measurement during the stirring time in the stirring treatment at 60°C and a rotation speed of 15000rpm was performed. From the results, the mean particle size for each stirring time was calculated. The relationship between stirring time and mean particle size obtained from the results is shown in Fig. 13.
When the stirring time is less than 5 minutes, or in other words, 0.1 minute, 0.5 minute, and 1 minute, dispersibility of the carbon dioxide absorbent in relation to the dispersion aid is insufficient and aggregation occurs. The mean particle size of the carbon dioxide absorbent is clearly large, from about 400nm to about 900nm. In addition, when the stirring time is longer than 60 minutes, or in other words, 90 minutes, 120 minutes, and 180 minutes, very little difference can be found in mean particle size compared to that when the stirring time is 30 minutes.

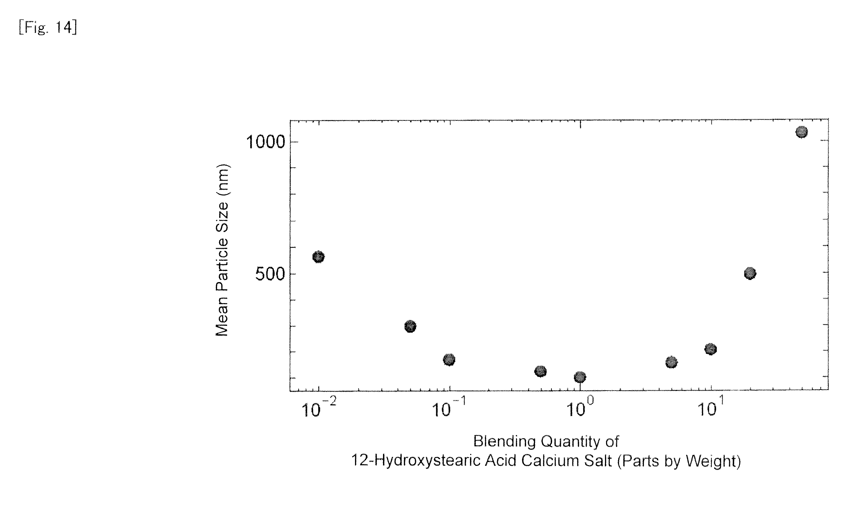

In addition, in relation to 100 parts by weight of calcium hydroxide as the carbon dioxide absorbent and 20 parts by weight of the ion-exchanged water, 12-hydroxystearic acid calcium salt as the dispersion aid was changed to 50, 20, 10, 5, 1, 0.5, 0.1, 0.05, and 0.01 parts by weight, and the supercritical fluid treatment was performed at a treatment temperature of 60°C and a treatment pressure of 20MPa for 15 minutes. The relationship between the blending quantity of the dispersion aid and the mean particle size of the carbon dioxide absorbent at this time is shown in Fig. 14.
When the dispersion aid is 50 parts by weight, the mean particle size is 1µm or more, and the carbon dioxide absorbent is aggregated. When the dispersion aid is 20 parts by weight or less, the mean particle size of the carbon dioxide absorbent gradually decreases and is smallest at 1 part by weight.
Thereafter, the mean particle size increases again to become about 500nm at 0.01 part by weight. Aggregation occurs in the carbon dioxide absorbent.
Therefore, it can be said that 0.1 to 5 parts by weight of the dispersion aid is preferably added to 100 parts by weight of the carbon dioxide absorbent.

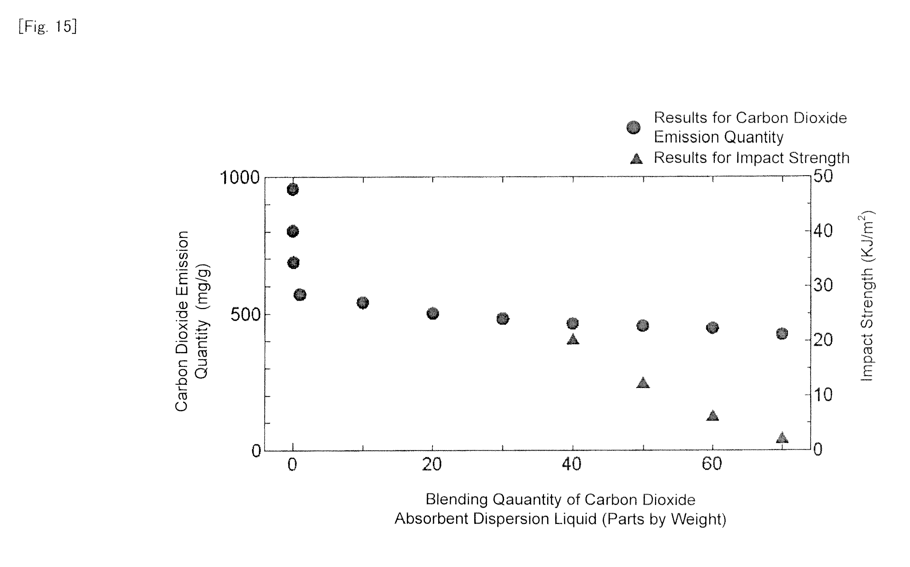

In addition, a carbon dioxide absorbent dispersion liquid was obtained by 100 parts by weight of calcium hydroxide as the carbon dioxide absorbent, 1 part by weight of 12-hydroxystearic acid calcium salt as the dispersion aid, and 20 parts by weight of ion-exchanged water as the dispersion solvent being subjected to the supercritical fluid treatment performed at a treatment temperature of 60°C and a treatment pressure of 20MPa for 15 minutes. Resin compositions for carbon dioxide emission reduction were obtained by respectively mixing 0. 001, 0.01, 0.1, 1, 10, 20, 30, 40, 50, 60, and 70 parts by weight of the obtained carbon dioxide absorbent dispersion liquid to 100 parts by weight of low-density polyethylene as the resin. The relationship between the blending quantity of the carbon dioxide absorbent dispersion liquid and impact strength of the resin composition for carbon dioxide emission reduction, and the relationship between the blending quantity of the carbon dioxide absorbent dispersion liquid and the carbon dioxide emission quantity are shown in Fig. 15.
In Fig. 15, it has been confirmed that, when the blending quantity of the carbon dioxide absorbent dispersion liquid is 0. 001, 0.01, 0.1, 1, 10, 20, and 30 parts by weight, the strength is such that breakage does not occur in a tensile impact strength test.
The impact strength decreases as the blending quantity of the carbon dioxide absorbent dispersion liquid increases. At 40 parts by weight, breakage occurs at 20kJ/m². At 50 parts by weight, breakage occurs at 12kJ/m². At 60 parts by weight, breakage occurs at 6kJ/m². At 70 parts by weight, breakage occurs at 2kJ/m².
Conversely, the carbon dioxide emission quantity decreases and indicates favorable values as the blending quantity of the carbon dioxide absorbent dispersion liquid increases.
Therefore, it can be said that, to obtain a resin composition for carbon dioxide emission reduction having favorable impact strength and excellent reduction in the carbon dioxide emission quantity, 0.1 to 40 parts by weight of the carbon dioxide absorbent dispersion liquid is preferably added to 100 parts by weight of the resin.

A mixture is obtained by adding the various carbon dioxide absorbent dispersion liquids obtained by the above-described operations by spraying at about 100ml per minute and stirring for about 15 minutes by a mixer. The mixture is then mixed by an ordinary method using a twin screw extruder, a single screw extruder, a heating-type triple roll, a heating pressure kneader, a Banbury mixer, or the like. As a result, a pellet of the resin composition for carbon dioxide emission reduction of the present invention can be obtained.

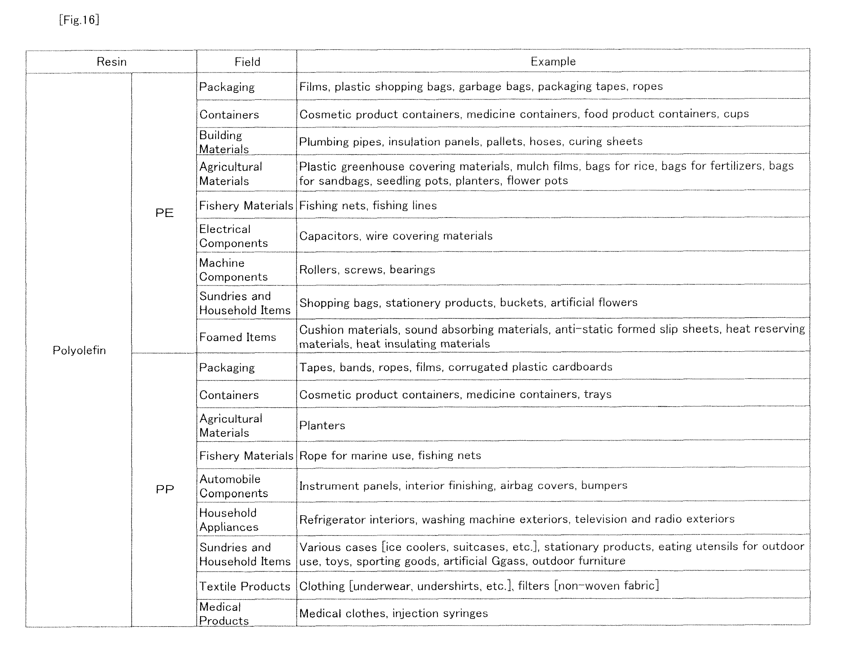

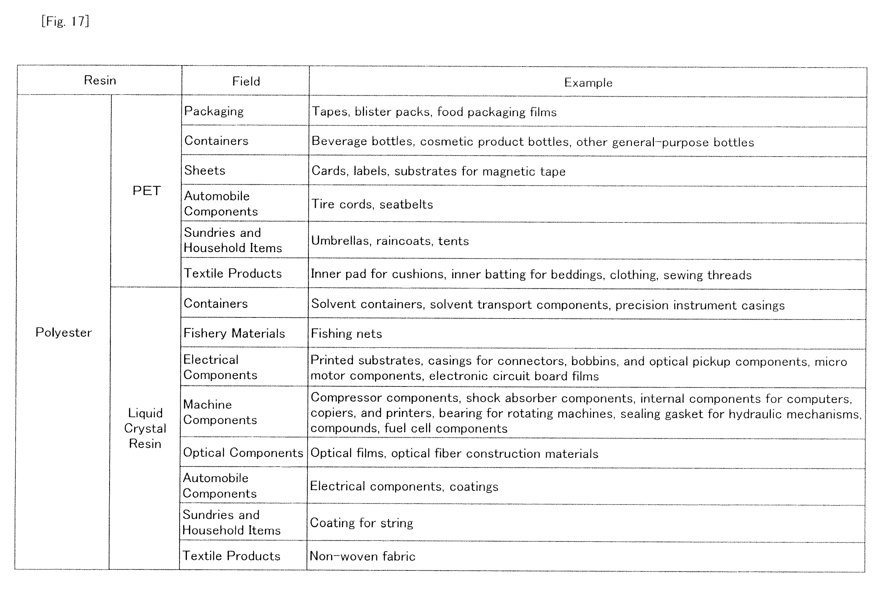

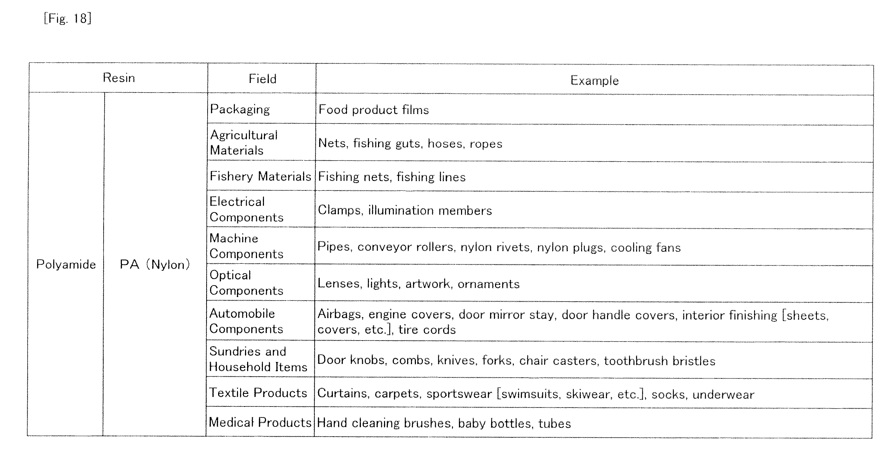

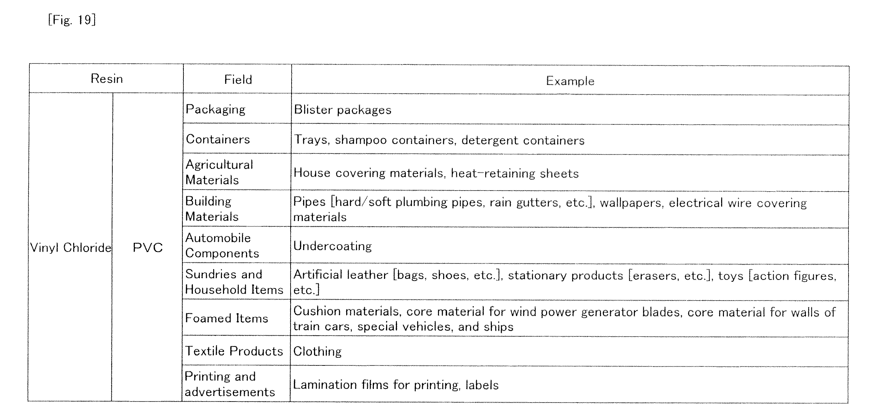

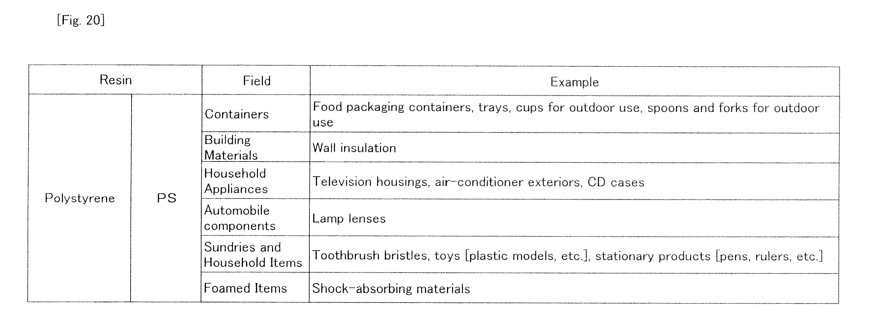

Next, uses of the resin composition for carbon dioxide emission reduction produced as described above are listed below and in Fig. 16, Fig. 17, Fig. 18, Fig. 19, and Fig. 20. However, the uses are not limited to the described items.

As uses of the resin composition for carbon dioxide emission reduction of the present invention, in the instance of a resin composition for carbon dioxide emission reduction formed by the mixture of carbon dioxide absorbent and dispersion aid being subjected to a dispersion treatment and subsequently added to polyethylene resin, packaging (films, plastic shopping bags, garbage bags, packaging tapes, ropes, etc.), containers (cosmetic product containers, medicine containers, food product containers, cups, etc.), building materials (plumbing pipes, insulation panels, pallets, hoses, curing sheets, etc.), agricultural materials (plastic greenhouse covering materials, mulch films, bags for rice, bags for fertilizers, bags for feed, bags for sandbags, seedling pots, planters, flower pots, etc.), fishery materials (fishing nets, fishing lines, etc.), electrical components (capacitors, wire covering materials, etc.), machine components (rollers, screws, bearings, etc.), sundries and household items (shopping bags, stationery products, buckets, artificial flowers, etc.), foamed items (foam cushioning materials, cushion materials, sound absorbing material, anti-static foamed slip sheets, heat reserving materials, heat insulating materials, etc.), and the like are given.

In addition, in the instance of a resin composition for carbon dioxide emission reduction formed by the mixture of carbon dioxide absorbent and dispersion aid being subjected to a dispersion treatment and subsequently added to polypropylene resin, packaging (tapes, bands, ropes, films, corrugated plastic cardboards, etc.), containers (cosmetic product containers, medicine containers, trays, etc.), agricultural materials (planters, etc.), fishery materials (rope for marine use, fishing nets, etc.), automobile components (instrument panels, interior finishing, airbag covers, bumpers, etc.), household appliances (refrigerator interiors, washing machine exteriors, television and radio exteriors, etc.), sundries and household items (various cases [ice coolers, suitcases, etc.], stationary products, eating utensils for outdoor use, toys, sporting goods, artificial grass, outdoor furniture, etc.), textile products (clothing [underwear, undershirts, etc.]), medical products (medical clothes, injection syringes, etc.), and the like are given.

In addition, in the instance of a resin composition for carbon dioxide emission reduction formed by the mixture of carbon dioxide absorbent and dispersion aid being subjected to a dispersion treatment and subsequently added to polyethylene terephthalate resin, packaging (tapes, blister packs, food packaging films, etc.), containers (beverage bottles, cosmetic product bottles, other general-purpose bottles, etc.), sheets (cards, labels, substrates for magnetic tape, etc.), automobile components (tire cords, seatbelts, etc.), sundries and household items (umbrellas, raincoats, tents, etc.), textile products (inner pad for cushions, inner batting for beddings, clothing, sewing threads, etc.), and the like are given.

In addition, in the instance of a resin composition for carbon dioxide emission reduction formed by the mixture of carbon dioxide absorbent and dispersion aid being subjected to a dispersion treatment and subsequently added to liquid crystal resin, containers (solvent containers, solvent transport components, precision instrument casings, etc.), fishery materials (fishing nets, etc.), electrical components (printed substrates, casings for connectors, bobbins, and optical pickup components, micro motor components, electronic circuit board films, etc.), machine components (compressor components, shock absorber components, internal components for computers, copiers, and printers, bearing for rotating machines, sealing gasket for hydraulic mechanisms, compounds, and fuel cell components), optical components (optical films, optical fiber construction materials, etc.), automobile components, (electrical components, coatings, etc.), sundries and household items (coating for string, etc.), textile products (non-woven fabric, etc.), and the like are given.

In addition, in the instance of a resin composition for carbon dioxide emission reduction formed by the mixture of carbon dioxide absorbent and dispersion aid being subjected to a dispersion treatment and subsequently added to polyamide resin, packaging (food product films, etc.), agricultural materials (nets, fishing guts, hoses, ropes, etc.), fishery materials (fishing nets, fishing lines, etc.), electrical components (clamps, illumination members, etc.), machine components (pipes, conveyor rollers, nylon rivets, nylon plugs, cooling fans, etc.), optical components (lenses, lights, artwork, ornaments, etc.), automobile components (airbags, engine covers, door mirror stay, door handle covers, interior finishing [sheets, covers, etc.], tire cords, etc.), sundries and household items (door knobs, combs, knives, forks, chair casters, toothbrush bristles, etc.), textile products (curtains, carpets, sportswear [swimsuits, skiwear, etc.], socks, underwear, etc.), medical products (hand cleaning brushes, baby bottles, tubes, etc.), and the like are given.

In addition, in the instance of a resin composition for carbon dioxide emission reduction formed by the mixture of carbon dioxide absorbent and dispersion aid being subjected to a dispersion treatment and subsequently added to vinyl chloride resin, packaging (blister packages, etc.), containers (trays, shampoo containers, detergent containers, etc.), agricultural materials (house covering materials, heat-retaining sheets, etc.), building materials (pipes [hard/soft plumbing pipes, rain gutters, etc.], wallpapers, electrical wire covering materials, etc.), automobile components (undercoating, etc.), sundries and household items (artificial leather [bags, shoes, etc.], stationary products [erasers, etc.], toys [action figures, etc.], etc.), foamed items (cushion materials, core material for wind power generator blades, core material for walls of train cars, special vehicles, and ships, etc.), textile products (clothing, etc.), printing and advertisements (lamination films for printing, labels, etc.), and the like are given.

In addition, in the instance of a resin composition for carbon dioxide emission reduction formed the mixture of carbon dioxide emission reduction formed by the mixture of carbon dioxide absorbent and dispersion aid being subjected to a dispersion treatment and subsequently added to polystyrene resin, containers (food packaging containers, trays, cups for outdoor use, spoons and forks for outdoor use, etc.), building materials (wall insulation, etc.), household appliances (television housings, air―conditioner exteriors, CD cases, etc.), automobile components (lamp lenses, etc.), sundries and household items (toothbrush bristles, toys [plastic models, etc.], stationary products [pens, rulers, etc.], foamed items (shock―absorbing materials, etc.), and the like are given.

### Examples

The present invention will be described in further detail with examples below. The present invention is not limited in anyway to these examples.

### (Example 1)

100 parts by weight of calcium hydroxide as the carbon dioxide absorbent, 1 part by weight of 12―hydroxystearic acid calcium salt as the dispersion aid, and 20 parts by weight of ion-exchanged water were placed in a high-pressure stainless steel container held at 60°C and sealed. Carbon dioxide was injected such that the pressure becomes 20MPa, and a supercritical state was achieved. After the mixture was stirred and mixed for 15 minutes while maintaining the temperature and pressure, supercritical fluid treatment was performed in which the carbon dioxide is released and the pressure is returned to atmospheric pressure. A carbon dioxide absorbent dispersion liquid was thereby obtained. Next, while spraying 30 parts by weight of the carbon dioxide absorbent dispersion liquid onto 100 parts by weight of low-density polyethylene resin (MORETEC 0168N manufactured by Prime Polymer Co., Ltd.) at 100ml per minute, the low―density polyethylene resin was stirred for 15 minutes. The resultant was then dried in a vacuum and moisture was removed. The resultant was then kneaded by a twin screw extruder having a shaft inner diameter of 30mm. A pellet-shaped resin composition for carbon dioxide emission reduction was obtained.
In addition, a resin composition obtained by performing all of the procedures in example 1 excluding the above-described supercritical fluid treatment procedure is comparison example 1.

### (Example 2)

Calcium hydroxide as the carbon dioxide absorbent in example 1 was changed to calcium oxide, and supercritical fluid treatment was performed. The obtained carbon dioxide absorbent dispersion liquid was added to low―density polyethylene resin, and a pellet―shaped resin composition for carbon dioxide emission reduction was obtained.
In addition, a resin composition obtained by performing all of the procedures in example 2 excluding the above-described supercritical fluid treatment procedure is comparison example 2.

### (Example 3)

Calcium hydroxide as the carbon dioxide absorbent in example 1 was changed to amorphous aluminosilicate, and supercritical fluid treatment was performed. The obtained carbon dioxide absorbent dispersion liquid was added to low-density polyethylene resin, and a pellet-shaped resin composition for carbon dioxide emission reduction was obtained.
In addition, a resin composition obtained by performing all of the procedures in example 3 excluding the above―described supercritical fluid treatment procedure is comparison example 3.

### (Example 4)

Calcium hydroxide as the carbon dioxide absorbent in example 1 was changed to barium titanate, and supercritical fluid treatment was performed. The obtained carbon dioxide absorbent dispersion liquid was added to low―density polyethylene resin, and a pellet―shaped resin composition for carbon dioxide emission reduction was obtained.
In addition, a resin composition obtained by performing all of the procedures in example 4 excluding the above-described supercritical fluid treatment procedure is comparison example 4.

### (Example 5)

Calcium hydroxide as the carbon dioxide absorbent in example 1 was changed to lithium silicate, and supercritical fluid treatment was performed. The obtained carbon dioxide absorbent dispersion liquid was added to low-density polyethylene resin, and a pellet-shaped resin composition for carbon dioxide emission reduction was obtained.
In addition, a resin composition obtained by performing all of the procedures in example 5 excluding the above-described supercritical fluid treatment procedure is comparison example 5.

### (Example 6)

12―hydroxystearic acid calcium salt (metal salt of fatty acid) as the dispersion aid in example 1 was changed to phosphatidylcholine (amphipathic lipid), and supercritical fluid treatment was performed. The obtained carbon dioxide absorbent dispersion liquid was added to low―density polyethylene resin, and a pellet―shaped resin composition for carbon dioxide emission reduction was obtained.
In addition, a resin composition obtained by performing all of the procedures in example 6 excluding the above-described supercritical fluid treatment procedure is comparison example 6.

### (Example 7)

12―hydroxystearic acid calcium salt (metal salt of fatty acid) as the dispersion aid in example 1 was changed to olefin/maleic acid copolymer sodium salt (polymeric surfactant), and supercritical fluid treatment was performed. The obtained carbon dioxide absorbent dispersion liquid was added to low-density polyethylene resin, and a pellet-shaped resin composition for carbon dioxide emission reduction was obtained.
In addition, a resin composition obtained by performing all of the procedures in example 7 excluding the above-described supercritical fluid treatment procedure is comparison example 7.

### (Example 8)

12―hydroxystearic acid calcium salt (metal salt of fatty acid) as the dispersion aid in example 3 was changed to phosphatidylcholine (amphipathic lipid), and supercritical fluid treatment was performed. The obtained carbon dioxide absorbent dispersion liquid was added to low-density polyethylene resin, and a pellet―shaped resin composition for carbon dioxide emission reduction was obtained.
In addition, a resin composition obtained by performing all of the procedures in example 8 excluding the above-described supercritical fluid treatment procedure is comparison example 8.

### (Example 9)

12―hydroxystearic acid calcium salt (metal salt of fatty acid) as the dispersion aid in example 3 was changed to sodium polyacrylate (polymeric surfactant), and supercritical fluid treatment was performed. The obtained carbon dioxide absorbent dispersion liquid was added to low―density polyethylene resin, and a pellet-shaped resin composition for carbon dioxide emission reduction was obtained.
In addition, a resin composition obtained by performing all of the procedures in example 9 excluding the above―described supercritical fluid treatment procedure is comparison example 9.

### (Example 10)

12―hydroxystearic acid calcium salt (metal salt of fatty acid) as the dispersion aid in example 1 was changed to POE30―10―ODES that is a polyoxyethylene gemini surfactant (polymeric surfactant), and supercritical fluid treatment was performed. The obtained carbon dioxide absorbent dispersion liquid was added to low-density polyethylene resin, and a pellet―shaped resin composition for carbon dioxide emission reduction was obtained.
In addition, a resin composition obtained by performing all of the procedures in example 10 excluding the above-described supercritical fluid treatment procedure is comparison example 10.

### (Example 11)

The carbon dioxide absorbent dispersion liquid obtained after the supercritical fluid treatment in example 1 was added to polyethylene terephthalate (PET) resin (A-PET FR manufactured by Teijin Chemicals, Ltd.), and a pellet-shaped resin composition for carbon dioxide emission reduction was obtained.
In addition, a resin composition obtained by performing all of the procedures in example 11 excluding the above―described supercritical fluid treatment procedure is comparison example 11.

### (Example 12)

The carbon dioxide absorbent dispersion liquid obtained after the supercritical fluid treatment in example 1 was added to nylon 6 resin (Amilan CM 1017 manufactured by Toray Industries, Inc.), and a pellet-shaped resin composition for carbon dioxide emission reduction was obtained.
In addition, a resin composition obtained by performing all of the procedures in example 12 excluding the above-described supercritical fluid treatment procedure is comparison example 12.

### (Example 13)

The carbon dioxide absorbent dispersion liquid obtained after the supercritical fluid treatment in example 1 was added to polyvinyl chloride (PVC) resin (SE―1100 manufactured by Sunarrow Kasei Co., Ltd.), and a pellet-shaped resin composition for carbon dioxide emission reduction was obtained.
In addition, a resin composition obtained by performing all of the procedures in example 13 excluding the above―described supercritical fluid treatment procedure is comparison example 13.

### (Example 14)

The carbon dioxide absorbent dispersion liquid obtained after the supercritical fluid treatment in example 1 was added to polystyrene (PS) resin (HIPS 475D manufactured by PS Japan Corporation), and a pellet-shaped resin composition for carbon dioxide emission reduction was obtained.
In addition, a resin composition obtained by performing all of the procedures in example 14 excluding the above-described supercritical fluid treatment procedure is comparison example 14.

### (Example 15)

100 parts by weight of calcium hydroxide as the carbon dioxide absorbent, 1 part by weight of 12―hydroxystearic acid calcium salt as the dispersion aid, and 20 parts by weight of ion-exchanged water were placed in a glass container. Under a condition of 60°C, ultrasonication was performed in which ultrasonic waves having a frequency of 40KHz and an output of 300W are irradiated for 15 minutes by an ultrasonic homogenizer. A carbon dioxide absorbent dispersion liquid was thereby obtained. Next, while spraying 30 parts by weight of the carbon dioxide absorbent dispersion liquid onto 100 parts by weight of low-density polyethylene resin at 100ml per minute, the low―density polyethylene resin was stirred for 15 minutes The resultant was then dried in a vacuum and moisture was removed. The resultant was then kneaded by a twin screw extruder having a shaft inner diameter of 30mm. A pellet-shaped resin composition for carbon dioxide emission reduction was obtained.
In addition, a resin composition obtained by performing all of the procedures in example 15 excluding the above-described ultrasonication procedure is comparison example 15. Here, comparison example 15 is the same as comparison example 1.

### (Example 16)

In example 15, ultrasonication was performed on a mixture in which amorphous aluminosilicate, as the carbon dioxide absorbent and phosphatidylcholine (amphipathic lipid) as the dispersion aid are mixed. A pellet-shaped resin composition for carbon dioxide emission reduction was obtained by a producing method similar to that in example 15 using the obtained carbon dioxide absorbent dispersion liquid.
In addition, a resin composition obtained by performing all of the procedures in example 16 excluding the above-described ultrasonication procedure is comparison example 16. Here, comparison example 16 is the same as comparison example 8.

### (Example 17)

100 parts by weight of calcium hydroxide as the carbon dioxide absorbent, 1 part by weight of 12―hydroxystearic acid calcium salt as the dispersion aid, and 20 parts by weight of ion―exchanged water were placed in a stainless steel container. Under a condition of 60°C, the stainless container was set in a stirrer (CLEARMIX CLM―0.8S manufactured by M Technique Co., Ltd.) and stirring treatment was performed in which the mixture is stirred at a rotation speed of 10, OOOrpm for 30 minutes. A carbon dioxide absorbent dispersion liquid was thereby obtained. Next, while spraying 30 parts by weight of the carbon dioxide absorbent dispersion liquid onto 100 parts by weight of low-density polyethylene resin at 100ml per minute, the low-density polyethylene resin was stirred for 15 minutes. The resultant was then dried in a vacuum and moisture was removed. The resultant was then kneaded by a twin screw extruder having a shaft inner diameter of 30mm. A pellet-shaped resin composition for carbon dioxide emission reduction was obtained.
In addition, a resin composition obtained by performing all of the procedures in example 17 excluding the above―described stirring treatment procedure is comparison example 17. Here, comparison example 17 is the same as comparison example 1.

### (Example 18)

In example 17, the stirring treatment was performed on a mixture in which amorphous aluminosilicate as the carbon dioxide absorbent and phosphatidylcholine (amphipathic lipid) as the dispersion aid are mixed. A pellet―shaped resin composition for carbon dioxide emission reduction was obtained by a producing method similar to that in example 17 using the obtained carbon dioxide absorbent dispersion liquid.
In addition, a resin composition obtained by performing all of the procedures in example 18 excluding the above―described stirring treatment procedure is comparison example 18. Here, comparison example 18 is the same as comparison example 8.

### (Example 19)

100 parts by weight of coconut mesocarp fibers as the organic compound carbon dioxide absorbent, 1 part by weight of 12―hydroxystearic acid calcium salt as the dispersion aid, and 20 parts by weight of ion-exchanged water were placed in a stainless steel container. Under a condition of 60°C, the stainless container was set in a stirrer (CLEARMIX CLM―0.8S manufactured by M Technique Co., Ltd.) and stirring treatment was performed in which the mixture is stirred at a rotation speed of 10,000rpm for 30 minutes. A carbon dioxide absorbent dispersion liquid was thereby obtained. Next, while spraying 30 parts by weight of the carbon dioxide absorbent dispersion liquid onto 100 parts by weight of low-density polyethylene resin (MORETEC 0168N manufactured by Prime Polymer Co., Ltd.) at 100ml per minute, the low-density polyethylene resin was stirred for 15 minutes. The resultant was then dried in a vacuum and moisture was removed. The resultant was then kneaded by a twin screw extruder having a shaft inner diameter of 30mm. A pellet-shaped resin composition for carbon dioxide emission reduction was obtained.
In addition, a resin composition obtained by performing all of the procedures in example 19 excluding the above-described stirring treatment procedure is comparison example 19.

Evaluations of the resin compositions for carbon dioxide emission reduction in the above-described example 1 to example 19 and resin compositions in the comparison example 1 to comparison example 19 based on tensile impact strength measurement (method described in JIS7160), tensile yield stress measurement (method described in JIS7161), modulus of elasticity measurement (method described in JIS7171), and carbon dioxide emission quantity measurement (method described in JIS7217) were performed. Specific evaluation methods are described hereafter.

### Evaluation Methods

### (Impact strength measurement)

Digital impact tester DR-IB tester (manufactured by Toyo Seiki Seisaku―sho, Ltd.) was used to perform measurement.
Based on the material standards prescribed by JIS standards, the pellet-shaped resin compositions for carbon dioxide emission reduction of the above-described example 1 to example 19 and resin compositions of the comparison example 1 to comparison example 19 are directly molded by injection molding, or cut after molding a plate material by compression molding or injection molding, into a notched plate shape having a length of 80mm, a width of 10mm, and a thickness of 4mm, thereby producing test pieces having the foregoing dimensions. Measurement is performed by fixing one end of the test piece to a gripping tool fixed to a base and fixing the other end to a movable cross-head support base, and striking the cross-head support base with a striker having an arbitrary weight at an impact speed of 3. 46m/s. The measurement was performed 10 times each.

### (Tensile yield stress measurement)

Strograph HT tester (manufactured by Toyo Seiki Seisaku―sho, Ltd.) was used to perform measurement.
Based on the material standards prescribed by JIS standards, the pellet―shaped resin compositions for carbon dioxide emission reduction of the above-described example 1 to example 19 and resin compositions of the comparison example 1 to comparison example 19 are directly molded by injection molding, or cut after molding a plate material by compression molding or injection molding, into dumbbell-shaped, plate-shaped test pieces having a length of 100mm, a width of 25mm, and a thickness of 4mm with a 20mm by 5mm parallel section, thereby producing test pieces having the foregoing dimensions. Measurement is performed by fixing both ends of the test piece and applying a constant tensile weight in the length direction of the test piece. Stress and strain corresponding to the each stress point are measured, and yield stress at a yield point is determined from a stress/strain curve. The measurement was performed 5 times each.

### (Modulus of elasticity measurement)

Bend graph 2 tester (manufactured by Toyo Seiki Seisaku―sho, Ltd.) was used to perform measurement.
Based on the material standards prescribed by JIS standards, the pellet―shaped resin compositions for carbon dioxide emission reduction of the above―described example 1 to example 19 and resin compositions of the comparison example 1 to comparison example 19 are directly molded by injection molding, or cut after molding a plate material by compression molding or injection molding, into plate-shaped test pieces having a length of 80mm, a width of 10mm, and a thickness of 4mm, thereby producing test pieces having the foregoing dimensions. Measurement is performed by free―supporting both ends of the test piece at a fulcrum interval of 64mm, and applying bending weight (testing stress) to the center between the fulcrums using a pressurizing wedge. Breaking stress and deflection are measured. Measurement was performed 5 times each.

### (Carbon dioxide emission quantity measurement)

Plastic flammability tester (manufactured by Sugiyama-Gen Co., Ltd) was used for measurement.
The resin compositions for carbon dioxide emission reduction of the above―described example 1 to example 19 and the resin compositions of the comparison example 1 to comparison example 19 weighing 0.1g each were used as the test samples. Measurement is performed by burning the 0.1g test sample for 10 minutes under conditions in which gas supply is 0.5L/min and set temperature is 750°C. The total emission quantity of carbon dioxide generated during burning is measured. Measurement was performed 3 times each.

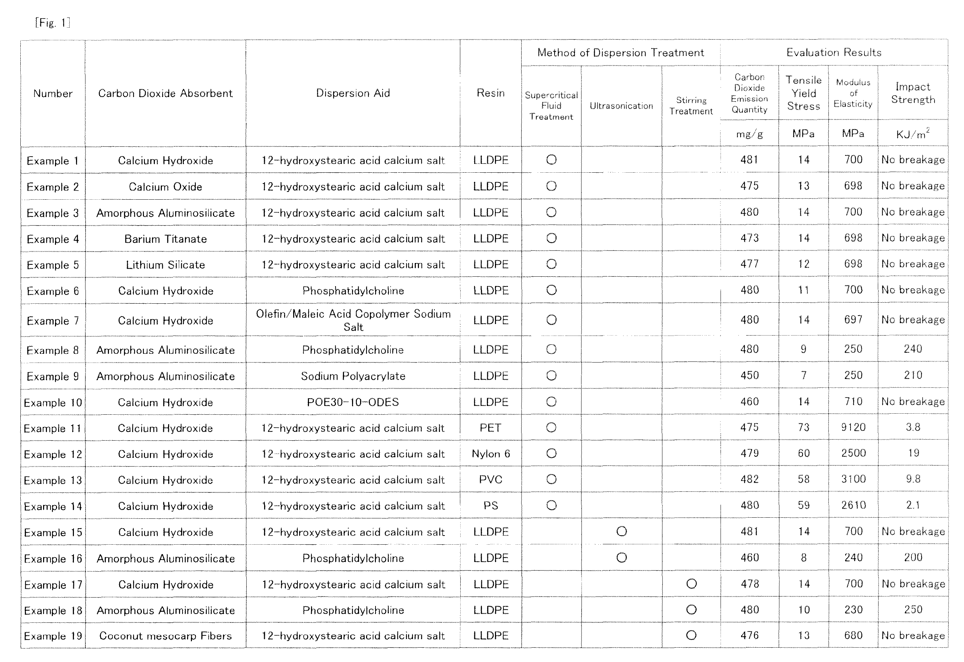

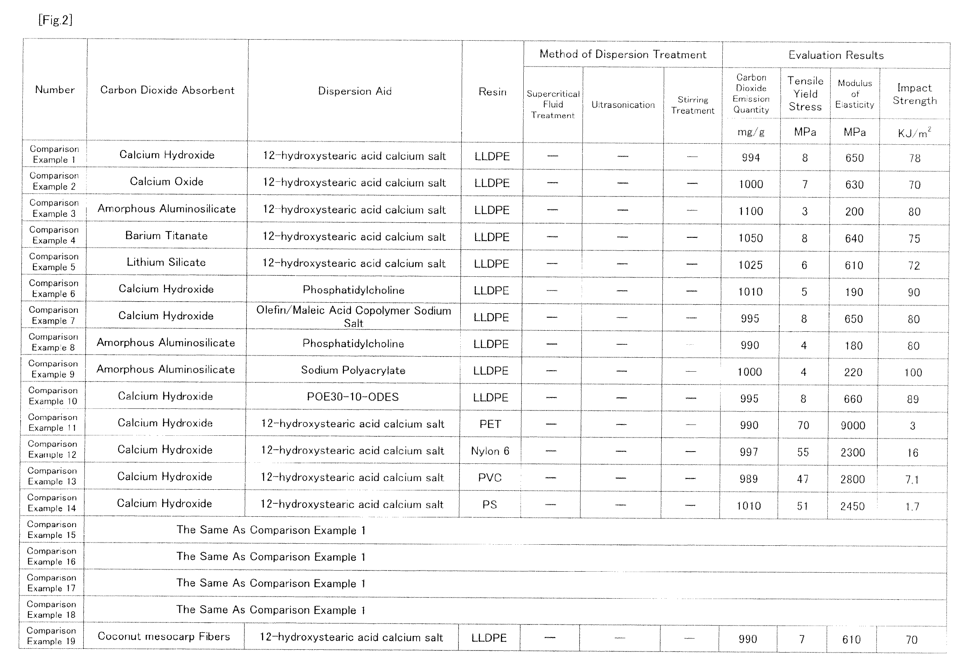

Fig. 1 shows the evaluation results for carbon dioxide emission quantity, tensile yield stress, modulus of elasticity, and tensile impact strength of the example. Fig. 2 shows the evaluation results for carbon dioxide emission quantity, tensile yield stress, modulus of elasticity, and tensile impact strength of the comparison examples. Each evaluation result indicates an average value in relation to the number of times measurement was performed.

Regarding all of the combinations of carbon dioxide absorbent, dispersion aid, and resin, the carbon dioxide emission quantity has clearly significantly decreased in each example in which a dispersion treatment is performed on the mixture composed of the carbon dioxide absorbent and the dispersion aid, compared to each comparison example in which a dispersion treatment is not performed.
In addition, in each example, favorable values are also indicated in mechanical properties of tensile yield stress, modulus of elasticity, and tensile impact strength, compared to each comparison example.
Furthermore, when the mechanical strength of each example is compared, with the mechanical strength of the simple resin used in each example as 100%, most are 90% to 70%. Sufficient mechanical strength is confirmed. Although the mechanical strength is inferior in some examples, these resin compositions can be used for purposes in which such load is not applied.

To describe the carbon dioxide emission reduction performance of the present invention it further detail, comparisons of the carbon dioxide emission quantity based on the type of carbon dioxide absorbent, the type of dispersion aid, the type of resin, and the type of dispersion treatment method will be discussed below.

### (Comparisons of carbon dioxide emission quantity based on type of carbon dioxide absorbent)

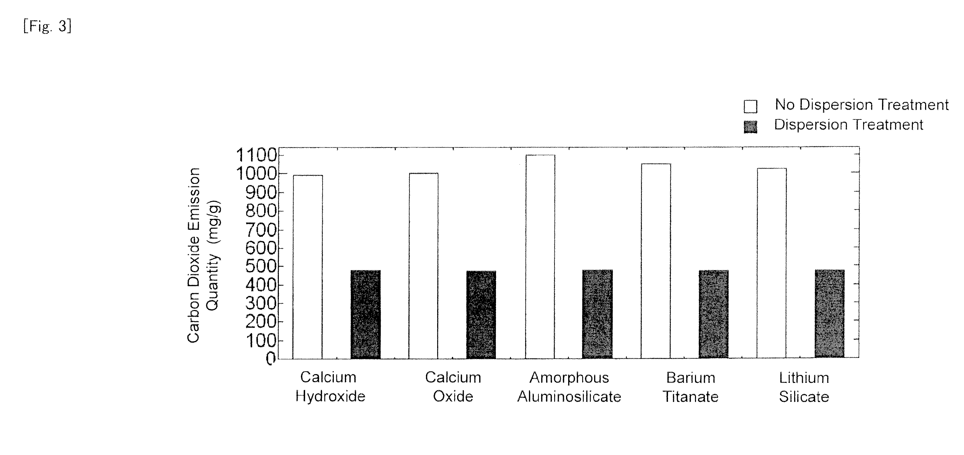

The reduction quantities of carbon dioxide emissions when calcium hydroxide (example 1 and comparison example 1) , calcium oxide (example 2 and comparison example 2), amorphous aluminosilicate (example 3 and comparison example 3), barium titanate (example 4 and comparison example 4), and lithium silicate (example 5 and comparison example 5) are used as the carbon dioxide absorbent are compared.
At this time, 12―hydroxystearic acid calcium salt is used as the dispersion aid and low―density polyethylene resin (LLDPE) is used as the resin.
As shown in Fig. 3, regarding all carbon dioxide absorbents, significant reduction in carbon dioxide emissions can be confirmed. In the instance of calcium hydroxide, emission reduction of 51.6% is actualized. In the instance of calcium oxide, emission reduction of 52.5% is actualized. In the instance of amorphous aluminosilicate, emission reduction of 56.4% is actualized. In the instance of barium titanate, emission reduction of 55.0% is actualized. In the instance of lithium silicate, emission reduction of 53.4% is actualized.
In particular, amorphous aluminosilicate that is a type of aluminosilicate shows the most favorable result of 56.4%.

### (Comparisons of carbon dioxide emission quantity based on type of dispersion aid)

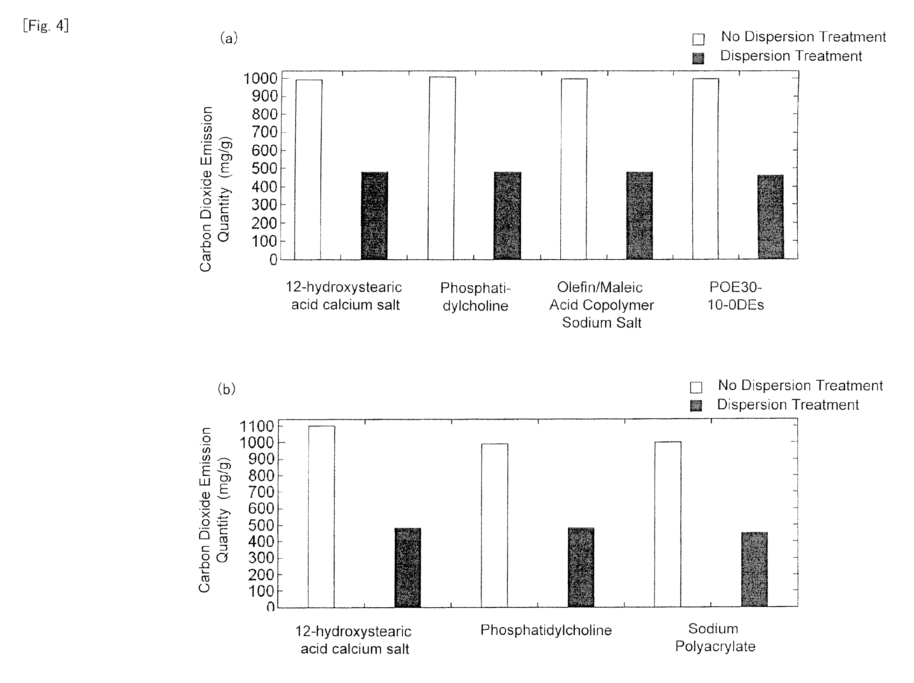

In addition, the reduction quantities of carbon dioxide emissions when calcium hydroxide is used as the carbon dioxide absorbent, and 12―hydroxystearic acid calcium salt (example 1 and comparison example 1), phosphatidylcholine (example 6 and comparison example 6), olefin/maleic acid copolymer sodium salt (example 7 and comparison example 7), and POE30―10―ODEs (example 10 and comparison example 10) are used as the dispersion aid are compared.
As shown in Fig. 4A, regarding all dispersion aids, significant reduction in carbon dioxide emissions can be confirmed. In the instance of 12―hydroxystearic acid calcium salt, emission reduction of 51.6% is actualized. In the instance of phosphatidylcholine, emission reduction of 52.5% is actualized. In the instance of olefin/maleic acid copolymer sodium salt, emission reduction of 51.8% is actualized. In the instance of POE30―10―ODEs, emission reduction of 53.8% is actualized.
In particular, POE30―10―ODEs that is a polymeric surfactant shows the most favorable result of 53.8%.

Furthermore, the reduction quantities of carbon dioxide emissions when amorphous aluminosilicate that indicates the most favorable reduction quantity among the carbon dioxide absorbents is used as the carbon dioxide absorbent, and 12―hydroxystearic acid calcium salt (example 3 and comparison example 3), phosphatidylcholine (example 8 and comparison example 8), and sodium polyacrylate (example 9 and comparison example 9) are used as the dispersion aid are compared.
As shown in Fig. 4B, favorable values are indicated as a whole compared to when calcium hydroxide is used as the carbon dioxide absorbent. In the instance of 12―hydroxystearic acid calcium salt, emission reduction of 56.4% is actualized. In the instance of phosphatidylcholine, emission reduction of 51.5% is actualized. In the instance of sodium polyacrylate, emission reduction of 55.0% is actualized.
In particular, 12―hydroxystearvc acid calcium salt that is a metal salt of fatty acid shows the most favorable result of 56.4%.

In the evaluation results, effective combinations among the carbon dioxide absorbents and the dispersion aids, although slight, can be confirmed. However, regarding all combinations, no significant difference can be found in the reduction quantity of carbon dioxide emissions based on combinations.

### (Comparisons of carbon dioxide emission quantity based on type of resin)

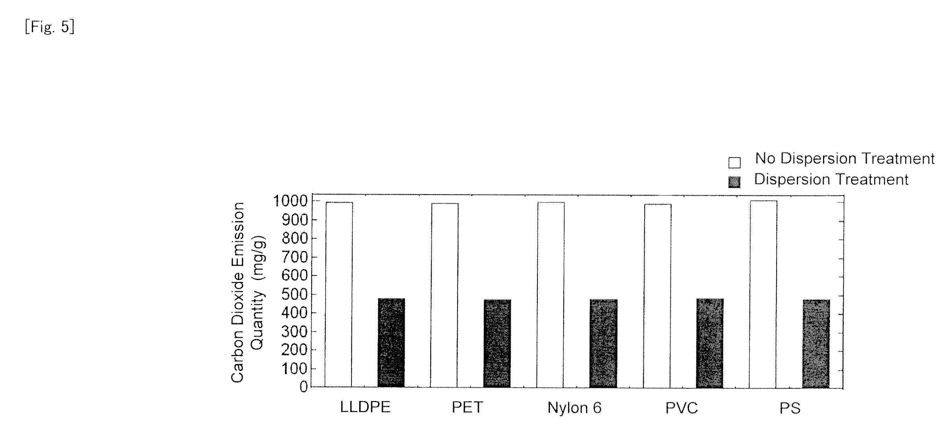

In addition, the reduction quantities of carbon dioxide emissions when the mixture in which the carbon dioxide absorbent is calcium hydroxide and the dispersion aid is 12―hydroxystearic acid calcium salt is low-density polyethylene resin (LLDPE) (example 1 and comparison example 1), PET resin (example 11 and comparison example 11), nylon 6 resin (example 12 and comparison example 12), polyvinyl chloride resin (PVC) (example 13 and comparison example 13), and polystyrene resin (PS) (example 14 and comparison example 14) are compared.
As shown in Fig. 5, very little difference in effect based on resin can be seen. Regarding all resins, significant reduction in carbon dioxide emissions can be confirmed. In the instance of LLDPE, emission reduction of 51.6% is actualized. In the instance of PET, emission reduction of 42.0% is actualized. In the instance of nylon 6, emission reduction of 52.0% is actualized. In the instance of PVC, emission reduction of 51.3% is actualized. In the instance of PS, emission reduction of 52.5% is actualized.

### (Comparisons of carbon dioxide emission quantity based on type of dispersion treatment)

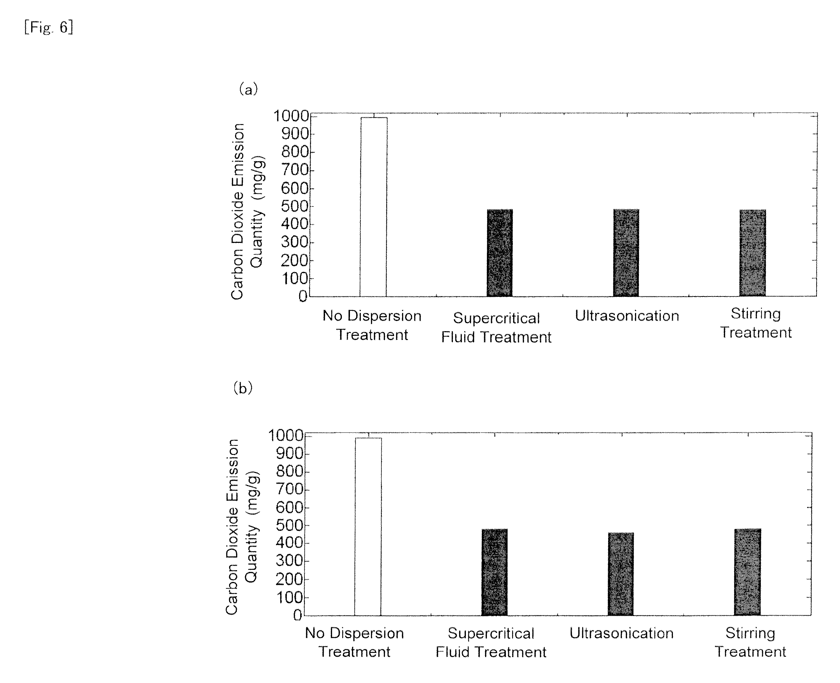

In addition, the reduction quantities of carbon dioxide emissions when the mixture in which the carbon dioxide absorbent is calcium hydroxide and the dispersion aid is 12―hydroxystearic acid calcium salt is not subjected to a dispersion treatment (comparison example 1), is subjected to the supercritical fluid treatment (example 1), is subjected to ultrasonication (example 15), is subjected to the stirring treatment (example 17) are compared.
As shown in Fig. 6A, regarding all dispersion treatment methods, the carbon dioxide emission quantity has decreased by about half compared to when a dispersion treatment is not performed. In the instance of supercritical fluid treatment, emission reduction of 51.6% is actualized. In the instance of ultrasonication, emission reduction of 51.6% is actualized. In the instance of stirring treatment, emission reduction of 51.9% is actualized.

Furthermore, the reduction quantities of carbon dioxide emissions when the mixture in which the carbon dioxide absorbent is amorphous aluminosilicate and the dispersion aid is phosphatidylcholine is not subjected to a dispersion treatment (comparison example 8), is subjected to the supercritical fluid treatment (examples 8), is subjected to ultrasonication (example 16), is subjected to the stirring treatment (example 18) are compared.
As shown in Fig. 6B, regarding all dispersion treatment methods, in a manner similar to when the carbon dioxide absorbent is calcium hydroxide and the dispersion aid is 12―hydroxystearic acid calcium salt, the carbon dioxide emission quantity has decreased by about half compared to when a dispersion treatment is not performed. In the instance of supercritical fluid treatment, emission reduction of5 1.5% is actualized. In the instance of ultrasonication, emission reduction of 53.5% is actualized. In the instance of stirring treatment, emission reduction, of 51.5% is actualized.

Therefore, regardless of the type of dispersion treatment method, extremely useful evaluation results were obtained in that, by a dispersion treatment being performed on the mixture of carbon dioxide absorbent and dispersion aid, and dispersibility of the carbon dioxide absorbent in the resin being improved, the carbon dioxide emission quantity of the obtained resin composition for carbon dioxide emission reduction is reduced by about 50%.

As a result of the resin composition for carbon dioxide emission reduction of the present invention such as that described above, the resin composition also has the inherent characteristics of resin. Therefore, transition of existing resin products to the resin composition for carbon dioxide emission reduction is facilitated, and early effects of suppressing global warming can be actualized.

The present invention is not limited to those according to the above―described embodiment. Various modifications can be made as required.

## Claims

1. A resin composition for carbon dioxide emission reduction formed by a mixture of a carbon dioxide absorbent and a dispersion aid being subjected to a dispersion treatment and subsequently added to a resin.

2. The resin composition for carbon dioxide emission reduction according to claim 1, wherein the dispersion treatment is at least one selected from a supercritical fluid treatment, ultrasonication, and a stirring treatment.

3. The resin composition for carbon dioxide emission reduction according to claim 1 or 2, wherein the carbon dioxide absorbent is at least one selected from a metal hydroxide, a metal oxide, an aluminosilicate, a titanic acid compound, and a lithium compound.

4. The resin composition for carbon dioxide emission reduction according to any one of claims 1 to 3, wherein the dispersion aid is at least one selected from a metal salt of fatty acid, a polymeric surfactant, and an amphipathic lipid.

5. The resin composition for carbon dioxide emission reduction according to any one of claims 1 to 4, wherein the resin is at least one selected from a polyolefin resin, a polyester resin, a polyamide resin, a vinyl chloride resin, and a polystyrene resin.

6. A method of producing a resin composition for carbon dioxide emission reduction formed by a mixture of a carbon dioxide absorbent and a dispersion aid being subjected to a dispersion treatment and subsequently added to a resin.

7. The method of producing a resin composition for carbon dioxide emission reduction according to claim 6, wherein the dispersion treatment at least one selected from a supercritical fluid treatment, ultrasonication, and a stirring treatment.

8. The method of producing a resin composition for carbon dioxide emission reduction according to claim 6 or 7, wherein the carbon dioxide absorbent at least one selected from a metal hydroxide, a metal oxide, an aluminosilicate, a titanic acid compound, and a lithium compound.

9. The method of producing a resin composition for carbon dioxide emission reduction according to any one of claims 6 to 8, wherein the dispersion aid at least one selected from a metal salt of fatty acid, a polymeric surfactant, and an amphipathic lipid.

10. The method of producing a resin composition for carbon dioxide emission reduction according to any one of claims 6 to 9, wherein the resin at least one selected from a polyolefin resin, a polyester resin, a polyamide resin, a Vinyl chloride resin, and a polystyrene resin.

11. Use of a resin composition for carbon dioxide emission reduction formed by a mixture of a carbon dioxide absorbent and a dispersion aid being subjected to a dispersion treatment and subsequently added to polyethylene resin, the use comprising:
packaging, containers, building materials, agricultural materials, fishery materials, electrical components, machine components, sundries and household items, and foamed items.

12. Use of a resin composition for carbon dioxide emission reduction formed by a mixture of a carbon dioxide absorbent and a dispersion aid being subjected to a dispersion treatment and subsequently added to polypropylene resin, the use comprising:
packaging, containers, agricultural materials, fishery materials, automobile components, household appliances, sundries and household items, textile products, and medical products.

13. Use of a resin composition for carbon dioxide emission reduction formed by a mixture of a carbon dioxide absorbent and a dispersion aid being subjected to a dispersion treatment and subsequently added to polyethylene terephthalate resin, the use comprising:
packaging, containers, sheets, automobile components, sundries and household items, and textile products.

14. Use of a resin composition for carbon dioxide emission reduction formed by a mixture of a carbon dioxide absorbent and a dispersion aid being subjected to a dispersion treatment and subsequently added to liquid crystal resin, the use comprising:
containers, fishery materials, electrical components, machine components, optical components, automobile components, sundries and household items, and textile products.

15. Use of a resin composition for carbon dioxide emission reduction formed by a mixture of a carbon dioxide absorbent and a dispersion aid being subjected to a dispersion treatment and subsequently added to polyamide resin, the use comprising:
packaging, agricultural materials, fishery materials, electrical components, machine components, optical components, automobile components, sundries and household items, textile products, and medical products.

16. Use of a resin composition for carbon dioxide emission reduction formed by a mixture of a carbon dioxide absorbent and a dispersion aid being subjected to a dispersion treatment and subsequently added to vinyl chloride resin, the use comprising:
packaging, containers, agricultural materials, building materials, automobile components, sundries and household items, foamed items, textile products, and printing and advertisements.

17. Use of a resin composition for carbon dioxide emission reduction formed by a mixture of a carbon dioxide absorbent and a dispersion aid being subjected to a dispersion treatment and subsequently added to polystyrene resin, the use comprising:
containers, building materials, household appliances, automobile components, sundries and household items, and foamed items.
